(19) Europäisches Patentamt
European Patent Office
Office européen des brevets

(11) **EP 1 682 621 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(51) Int Cl.:
*C09C 1/00* (2006.01)     *C09C 1/64* (2006.01)
*C09D 5/36* (2006.01)

(21) Anmeldenummer: 04790787.8

(22) Anmeldetag: **23.10.2004**

(86) Internationale Anmeldenummer:
**PCT/EP2004/011996**

(87) Internationale Veröffentlichungsnummer:
**WO 2005/042643 (12.05.2005 Gazette 2005/19)**

(54) **GLANZPIGMENTE MIT AUSGEPRÄGTEM GLITZEREFFEKT**

LUSTER PIGMENTS HAVING A PRONOUNCED GLITTERING EFFECT

PIGMENTS BRILLANTS A EFFET SCINTILLANT MARQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.10.2003 DE 10350419**

(43) Veröffentlichungstag der Anmeldung:
**26.07.2006 Patentblatt 2006/30**

(73) Patentinhaber: **BASF SE**
**67056 Ludwigshafen (DE)**

(72) Erfinder:
• **MRONGA, Norbert**
**69221 Dossenheim (DE)**
• **SCHMID, Raimund**
**67435 Neustadt (DE)**
• **SEEGER, Oliver**
**68165 Mannheim (DE)**

(56) Entgegenhaltungen:
**EP-A- 0 655 486     EP-A- 1 270 684**
**DE-A1- 19 836 810**

**Beschreibung**

Die vorliegende Erfindung betrifft neue Glanzpigmente mit ausgeprägtem Glitzereffekt auf der Basis von Aluminiumplättchen, die mit Eisenoxid beschichtet sind und vor der Beschichtung eine mittlere Plättchengröße von 8 bis 30 $\mu$m, eine mittlere Plättchendicke von 300 bis 600 nm und ein Verhältnis von Größe zu Dicke von 15 bis 70 aufweisen.

Außerdem betrifft die Erfindung die Verwendung dieser Glanzpigmente zur Einfärbung von Lacken, Anstrichmitteln, Druckfarben, Kunststoffen, keramischen Massen und Glasuren und Zubereitungen der dekorativen Kosmetik.

Unter Eisenoxid soll erfindungsgemäß insbesondere $\alpha$-Eisen(III)oxid verstanden werden. Es sollen jedoch auch Gemische von $\alpha$-Eisen(III)oxid mit untergeordneten Mengen an $\gamma$-Eisen(III)oxid und/oder Magnetit (Fe$_3$O$_4$) umfaßt werden.

Plättchenförmige eisenoxidbeschichtete Aluminiumpigmente sind seit langem bekannt und beispielsweise in der EP-A-33 457 beschrieben. Sie gehören zur Klasse der Effektpigmente, die aufgrund ihrer besonderen koloristischen Eigenschaften breite Anwendung bei der Einfärbung von Lacken, Anstrich- und Druckfarben, Kunststoffen, keramischen Massen und Glasuren sowie Zubereitungen der dekorativen Kosmetik gefunden haben.

Ihre besondere optische Wirkung erlangen die Effektpigmente durch die winkelselektive Reflexion von Licht an ihren plättchenförmigen, im Anwendungsmedium parallel ausgerichteten Teilchen. Dadurch ergeben sich je nach chemischem Aufbau der Pigmente winkelabhängig Hell/Dunkel-Effekte oder auch Farbwechsel, die als "Flop" bekannt sind.

Die eisenoxidbeschichteten Aluminiumpigmente erhalten ihr besonderes optisches Profil aus einer Kombination von Spiegelreflexion an der Grenzfläche des Aluminiumplättchens, selektiver Lichtabsorption in der Eisenoxidschicht und Lichtinterferenz an Ober- und Unterseite die Eisenoxidschicht.

Die Lichtinterferenz bewirkt einen Farbeindruck, der durch die Schichtdicke der Eisenoxidbeschichtung bestimmt wird. Die trockenen Pigmentpulver weisen daher an der Luft mit zunehmender Eisenoxidschichtdicke folgende Farbtöne auf, wobei zwischen Interferenz 1. und 2. Ordnung unterschieden wird:

Interferenzfarben 1. Ordnung: schwachgelb (10 nm), gold (21 nm), rötlichgold (28 nm) rot (35 nm), violett (44 nm), grauviolett (53 nm);
Interferenzfarben 2. Ordnung: graugelb (63 nm), graugold (75 nm), rötlichgold (88 nm), rotgold (104 nm), rot (122 nm).

Pigmente mit einer Eisenoxidschichtdicke von etwa 35 nm sind bemerkenswerterweiser als Pulver zwar rot, im Anwendungsmedium, z.B. im Lack, jedoch orange.

Die eisenoxidbeschichteten Aluminiumpigmente sind sehr brillant und zeigen hohes Deckvermögen, weshalb sie besonders häufig in Automobildecklacken zum Einsatz kommen. Als Basis für die dort üblicherweise verwendeten Pigmente dienen Aluminiumplättchen mit mittleren Teilchengrößen von 8 bis 35 $\mu$m, vorzugsweise 13 bis 25 $\mu$m, und mittlere Teilchendicken von etwa 80 bis 200 nm, entsprechend einer spezifischen Oberfläche von 3 bis 8 m$^2$/g (gemessen in Stickstoff nach BET) und Größen/Dicken-Verhältnissen ("aspect ratio") von 100 bis 175. Diese Pigmente zeigen im Lack einen hochchromatischen, sehr homogen und "glatt" wirkenden Metallspiegeleffekt.

Zunehmend werden jedoch Effektlackierungen gewünscht, die hohe Buntheit (Chroma) und Farbbrillanz mit einem ausgeprägt glitzernden und funkelnden Eindruck verbinden. Insbesondere im direkten Sonnenlicht soll der Eindruck einer "lebendigen", sich mit dem Betrachtungswinkel verändernden Lackierung mit einer Vielzahl farbiger Glanzzentren erzeugt werden. Gleichzeitig sollen wichtige anwendungstechnische Eigenschaften, wie hohes Deckvermögen der eingesetzten Effektpigmente, Verarbeitbarkeit der Lacke in großen Lackierstraßen (Ringleitungsstabilität) und ein hohes Vermögen zur scharfen Abbildung von Spiegelbildern am fertig lackierten Gegenstand (DORI = distinctness of reflected image) erhalten bleiben.

Bekanntermaßen zeigen grobteilige Effektpigmente mit mittleren Teilchendurchmessern oberhalb von ca. 40 bis 50 $\mu$m im Lack zwar das gewünschte Glitzern und Funkeln, jedoch ist ihr Deckvermögen erheblich geringer, sie verstopfen oftmals die bei der Lackapplikation verwendeten Spritzdüsen, und schließlich ist auch die Abbildungsschärfe DORI der Lacke unbefriedigend, weshalb diese Pigmente nicht für die Anwendung geeignet sind.

Der Erfindung lag daher die Aufgabe zugrunde, Effektpigmente zur Verfügung zu stellen, welche die gewünschten optischen Eigenschaften, insbesondere hochbrillante Farbtöne, Deckvermögen, Glitzer- und Funkeleffekte im Anwendungsmedium, zeigen und gleichzeitig den anwendungstechnischen Anforderungen vor allem beim Einsatz in großen Lackierstraßen genügen.

Demgemäß wurden Glanzpigmente mit ausgeprägtem Glitzereffekt auf der Basis von Aluminiumplättchen gefunden, die mit Eisenoxid beschichtet sind und vor der Beschichtung eine mittlere Plättchengröße von 8 bis 30 $\mu$m, eine mittlere Plättchendicke von 300 bis 600 nm und ein Verhältnis von Größe zu Dicke von 15 bis 70 aufweisen.

Bevorzugt basieren die erfindungsgemäßen Glanzpigmente auf Aluminiumplättchen mit einem Verhältnis von Größe zu Dicke von 25 bis 55.

Besonders bevorzugte erfindungsgemäße Glanzpigmente basieren auf Aluminiumplättchen mit einer mittleren Plättchengröße von 13 bis 25 $\mu$m, einer

mittleren Plättchendicke von 350 bis 550 nm und einem Verhältnis von Größe zu Dicke von 25 bis 55.

Die mittlere Dicke der Aluminiumplättchen ist dabei leicht nach folgender Formel aus ihrer spezifischen Oberfläche nach BET zu berechnen:

$$S = [2000 \ (2 \ h + d)] \ / \ (d \ h \ \rho)$$

Dabei bedeuten:

S: spezifische Oberfläche nach BET in $m^2/g$
h: mittlere Plättchendicke in nm
d: mittlerer Plättchendurchmesser (mittlere Plättchengröße) in nm
p: spezifisches Gewicht von Aluminium in $g/cm^3$

Es war nicht vorherzusehen, daß die relativ feinteiligen erfindungsgemäßen Glanzpigmente bei der Anwendung die gewünschten Glitzer- und Funkeleffekte zeigen würden, da nach der bisherigen Erfahrung nur grobteilige Glanzpigmente diese Effekte hervorzurufen vermochten.

Von besonderem Interesse sind erfindungsgemäße Glanzpigmente, bei denen die Aluminiumplättchen mit einer Eisenoxidbeschichtung der geometrischen Schichtdicke von 18 bis 25 nm, 30 bis 40 nm bzw. 110 bis 140 nm belegt sind. Diese Pigmente weisen bei der Anwendung z.B. im Lack besonders brillante Farbtöne, nämlich ein besonders brillantes Gold, Orange bzw. Rot, auf.

Die erfindungsgemäßen Glanzpigmente können nach bekannten Verfahren hergestellt werden. Besonders vorteilhaft sind sie nach dem z.B. in der EP-A-33 457 beschriebenen CVD-Verfahren ("chemical vapor deposition") durch oxidative Zersetzung von Eisencarbonyl in der Gasphase in Gegenwart der fluidisierten Aluminiumplättchen erhältlich. Sie können jedoch auch naßchemisch durch Hydrolyse geeigneter Eisenverbindungen, z.B. anorganischer Salze, wie Eisennitrat, Eisensulfat und Eisenchlorid, oder, gegebenenfalls unter gleichzeitiger Oxidation, anderer vor allem organischer Eisenverbindungen, wie Eisenacetat, Eisenformiat, Eisencitrat, Eisencarbonyl, Eisenacetylacetonat und Ferrocen, in Gegenwart der in Wasser und/oder organischen Lösungsmitteln suspendierten Aluminiumplättchen und gegebenenfalls anschließende Calcination hergestellt werden.

Gewünschtenfalls können die erfindungsgemäßen Glanzpigmente noch einer zusätzlichen Behandlung unterzogen werden, um sie insbesondere für die Anwendung in wäßrigen Systemen, z.B. Wasserbasislacken, zu stabilisieren. Eine analoge Behandlung der Aluminiumplättchen selbst empfiehlt sich auch vor der naßchemischen Beschichtung mit Eisenoxid. Die erfindungsgemäßen Glanzpigmente können demgemäß zusätzlich eine korrosionshemmende Beschichtung direkt auf den Aluminiumplättchen und/oder als Außenschicht auf der Eisenoxidschicht aufweisen.

Eine Reihe von Stabilisierungsmaßnahmen ist hierfür bekannt, bei denen insbesondere oxidische Chrom-, Molybdän-, Phosphor-, Silicium-, Zirkon- und/ oder Aluminiumverbindungen als korrosionshemmende Mittel eingesetzt werden. Beispielsweise genannt seien das Einwirken von Chromsäure/Chromaten oder Molybdänsäure/Molybdaten, das Überziehen mit zusätzlichen Schutzschichten, z.B. aus Siliciumdioxid/Siliciumoxidhydrat, Zirkondioxid/Zirkonoxidhydrat, Aluminiumoxid/Aluminiumoxidhydrat, Phosphiten und/oder Phosphaten, und die gemeinsame Applikation mit korrosionshemmenden Stoffen, wie organischen Nitroverbindungen und organischen und/oder anorganischen Verbindungen des drei- oder fünfwertigen Phosphors.

Die erfindungsgemäßen Glanzpigmente eignen sich hervorragend zur Einfärbung von Lacken, Anstrichmitteln, Druckfarben, insbesondere Sicherheitsdruckfarben, Kunststoffen, keramischen Massen und Glasuren und Zubereitungen der dekorativen Kosmetik. Sie zeichnen sich dabei durch hohe Buntheit, hohe Brillanz, hohen Glanz, hohe Abbildungsschärfe (DORI), hohes Deckvermögen und die gewünschten Glitzer- und Funkeleffekte aus und sind vorteilhaft verarbeitbar, vor allem können sie auch ohne Probleme in großen Lackierstraßen zum Einsatz kommen.

Besondere Bedeutung haben die erfindungsgemäßen Glanzpigmente für die Einfärbung von Lacken, die lösungsmittelhaltig oder wasserbasierend sein können. Als besonders wichtiges Anwendungsmedium seien dabei Automobillacke genannt. Sie eignen sich insbesondere für Zweischicht-Metallic-Lackierungen, verleihen jedoch auch Einschicht- und Mehrschicht-Metallic-Lackierungen den gewünschten Glitzer- und Funkeleffekt.

Die erfindungsgemäßen Glanzpigmente können für sich allein oder in Kombination mit anderen Pigmenten aus der Gruppe der Effektpigmente, der Fluoreszenzfarbmittel und der deckenden und transparenten Bunt-, Weiß- und Schwarzpigmente zum Einsatz kommen.

Besonders reizvoll ist die Kombination mit farbtongleichen Effektpigmenten nach dem Stand der Technik, die über die Wahl des Mischungsverhältnisses eine stufenlose Einstellung des Glitzer- und Funkeleffekts auf von nicht vorhanden bis ausgeprägt ermöglicht.

Als Beispiele für zu kombinierende herkömmliche Effektpigmente seien titandioxid- oder eisenoxidbeschichtete Glimmerpigmente (Perlglanzpigmente), titandioxid- oder eisenoxidbeschichtete Aluminiumpigmente, titanioxid- oder eisenoxidbeschichtete Aluminiumoxidplättchen und unbeschichtete Aluminiumflakes genannt. Von besonderem Interesse sind Effektpigmente mit ausgeprägtem winkelabhängigen Farbwechsel, wie hologrammartige Pigmente, Pigmente auf Basis chiraler flüssigkristalliner Verbindungen und mehrschichtig aufgebaute plättchenförmige Pigmente, die auf vollständig umhüllten Substratplättchen z.B. aus Aluminium, dotiertem Eisenoxid, Siliciumdioxid, synthetischen oder natürlichen Silikaten, wie Glimmer, oder Glas basieren können, wie mit Siliciumdioxid und Eisenoxid beschichtete Aluminium- und Eisenoxidplättchen, Glimmerplättchen, die mit Titandioxid, Siliciumdioxid und einem Metall, mit Eisenoxid, Siliciumdioxid und einem Metall, mit Eisenoxid, Siliciumdioxid und Titandioxid, mit Titandioxid, Siliciumdioxid und Eisenoxid, mit einem Metall, Siliciumdioxid und Titandioxid, mit einem Metall, Siliciumdioxid und Eisenoxid oder mit einem Metall, Siliciumdioxid und einem Metall beschichtet sind, oder aus Mehrschichtsystemen bestehen, die z.B. die Schichtfolgen Eisenoxid/Siliciumdioxid/Eisenoxid, Eisenoxid/Titandioxid/Eisenoxid, Titandioxid/Siliciumdioxid/Titandioxid, Chrom/Magnesiumfluorid/Aluminium/Magnesiumfluorid/Chrom oder Chrom/Magnesiumfluorid/Chrom aufweisen.

Beispiele

Beispiel 1

In einem zylinderförmigen Wirbelschichtreaktor aus Glas (Durchmesser 15 cm, Länge 80 cm), dessen unteres Ende mit einer Glasfritte und Wirbelgaseinleitung und dessen oberes Ende mit einem Deckel mit eingebauten Filterstrümpfen versehen war und ein um die Glaswand gewickeltes elektrisches Heizband aufwies, wurden 1,5 kg eines Aluminiumpulvers mit einer mittleren Plättchengröße von 18 $\mu$m und einer mittleren Plättchendicke von 430 nm durch einen Wirbelgasstrom von 1000 l/h Stickstoff fluidisiert. Nach Aufheizen des Reaktors auf 200°C wurde dem Wirbelstickstoff soviel Luft zugemischt, daß das Gasgemisch im Reaktor etwa 2,5 Vol.-% Sauerstoff enthielt. Über eine seitlich unmittelbar über der Fritte in den Reaktor eingesetzte Düse wurden dann 300 ml Eisenpentacarbonyl, das zuvor in einer beheizten Vorlage verdampft wurde, mittels eines Stickstoff-Trägergasstromes von 200 l/h kontinuierlich in 6 h in den Reaktor überführt und dort zu sich auf den Aluminiumplättchen abscheidendem Eisen(III)oxid zersetzt.

Es wurde ein brillantes Pigmentpulver mit goldener Interferenzfarbe erhalten, das bei Applikation in einem lösungsmittelhaltigen CAB-Lacksystem auf schwarz-weißem Karton eine brillante goldene Farbe, ein gutes Deckvermögen und ein ausgeprägtes Glitzern und Funkeln aufwies.

Beispiel 2

Es wurde analog Beispiel 1 vorgegangen, jedoch wurden 0,8 kg des Aluminiumpulvers unter Verwendung von 230 ml Eisenpentacarbonyl in 5 h mit Eisenoxid beschichtet.

Es wurde ein brillantes Pigmentpulver mit roter Interferenzfarbe erhalten, das bei Applikation in einem lösungsmittelhaltigen CAB-Lacksystem auf schwarz-weißem Karton eine brillante orange Farbe, ein gutes Deckvermögen und ein ausgeprägtes Glitzern und Funkeln aufwies.

Beispiel 3

Es wurde analog Beispiel 1 vorgegangen, jedoch wurde das Aluminiumpulver unter Verwendung von 1665 ml Eisenpentacarbonyl in 35 h mit Eisenoxid beschichtet.

Es wurde ein brillantes Pigmentpulver mit roter Interferenzfarbe erhalten, das bei Applikation in einem lösungsmittelhaltigen CAB-Lacksystem auf schwarz-weißem Karton eine brillante rote Farbe, ein gutes Deckvermögen und ein ausgeprägtes Glitzern und Funkeln aufwies.

Beispiel 4

Es wurde analog Beispiel 1 vorgegangen, jedoch wurden 1,5 kg eines Aluminiumpulvers mit einer mittleren Plättchengröße von 22 $\mu$m und einer mittleren Plättchendicke von 550 nm unter Verwendung von 25 ml Eisenpentacarbonyl in 5 h mit Eisenoxid beschichtet.

Es wurde ein brillantes Pigmentpulver mit goldener Interferenzfarbe erhalten, das bei Applikation in einem lösungsmittelhaltigen CAB-Lacksystem auf schwarz-weißem Karton eine brillante goldene Farbe, ein gutes Deckvermögen und ein ausgeprägtes Glitzern und Funkeln aufwies.

Beispiel 5

Es wurde analog Beispiel 1 vorgegangen, jedoch wurden 1,5 kg des Aluminiumpulvers aus Beispiel 4 unter Verwendung von 330 ml Eisenpentacarbonyl in 7 h mit Eisenoxid beschichtet.

Es wurde ein brillantes Pigmentpulver mit roter Interferenzfarbe erhalten, das bei Applikation in einem lösungsmittelhaltigen CAB-Lacksystem auf schwarz-weißem Karton eine brillante orange Farbe, ein gutes Deckvermögen und ein ausgeprägtes Glitzern und Funkeln aufwies.

Beispiel 6

Es wurde analog Beispiel 1 vorgegangen, jedoch wurden 1,5 kg des Aluminiumpulvers aus Beispiel 4 unter Verwendung von 1250 ml Eisenpentacarbonyl in 25 h mit Eisenoxid beschichtet.

Es wurde ein brillantes Pigmentpulver mit roter Interferenzfarbe erhalten, das bei Applikation in einem lösungsmittelhaltigen CAB-Lacksystem auf schwarz-weißem Karton eine brillante rote Farbe, ein gutes Deckvermögen und ein ausgeprägtes Glitzern und Funkeln aufwies.

## Patentansprüche

1. Glanzpigmente mit ausgeprägtem Glitzereffekt auf der Basis von Aluminiumplättchen, die mit Eisenoxid beschichtet sind und vor der Beschichtung eine mittlere Plättchengröße von 8 bis 30 μm, eine mittlere Plättchendicke von 300 bis 600 nm und ein Verhältnis von Größe zu Dicke von 15 bis 70 aufweisen.

2. Glanzpigmente nach Anspruch 1, die auf Aluminiumplättchen mit einem Verhältnis von Größe zu Dicke von 25 bis 55 basieren.

3. Glanzpigmente nach Anspruch 1, die auf Aluminiumplättchen mit einer mittleren Plättchengröße von 13 bis 25 μm, einer mittleren Plättchendicke von 350 bis 550 nm und einem Verhältnis von Größe zu Dicke von 25 bis 55 basieren.

4. Glanzpigmente nach den Ansprüchen 1 bis 3, die eine Eisenoxidbeschichtung mit einer geometrischen Schichtdicke von 18 bis 25 nm aufweisen.

5. Glanzpigmente nach den Ansprüchen 1 bis 3, die eine Eisenoxidbeschichtung mit einer geometrischen Schichtdicke von 30 bis 40 nm aufweisen.

6. Glanzpigmente nach den Ansprüchen 1 bis 3, die eine Eisenoxidbeschichtung mit einer geometrischen Schichtdicke von 110 bis 140 nm aufweisen.

7. Glanzpigmente nach den Ansprüchen 1 bis 6, die zusätzlich eine korrosionshemmende, auf oxidischen Chrom-, Molybdän-, Phosphor-, Silicium-, Zirkon- und/oder Aluminiumverbindungen basierende Beschichtung direkt auf den Aluminiumplättchen und/oder auf der Eisenoxidschicht aufweisen.

8. Verwendung von Glanzpigmenten nach den Ansprüchen 1 bis 7 zur Einfärbung von Lacken, Anstrichmitteln, Druckfarben, Kunststoffen, keramischen Massen und Glasuren und Zubereitungen der dekorativen Kosmetik.

9. Verwendung von Glanzpigmenten nach den Ansprüchen 1 bis 7 zur Einfärbung von Einschicht-, Zweischicht- und Mehrschicht-Metallic-Lackierungen.

10. Verwendung nach Anspruch 8 oder 9, **dadurch gekennzeichnet, dass** die Glanzpigmente in Kombination mit anderen Pigmenten aus der Gruppe der Effektpigmente, Fluoreszenzfarbmittel, deckenden und transparenten Bunt-, Weiß- und Schwarzpigmente eingesetzt werden.

## Claims

1. Luster pigments having pronounced sparkle which are based on aluminum platelets which have been coated with iron oxide and have in the precoated state an average platelet size from 8 to 30 μm, an average platelet thickness from 300 to 600 nm and an aspect ratio from 15 to 70.

2. Luster pigments according to claim 1 that are based on aluminum platelets having an aspect ratio from 25 to 55.

3. Luster pigments according to claim 1 that are based on aluminum platelets having an average platelet size from 13 to 25 μm, an average platelet thickness from 350 to 550 nm and an aspect ratio from 25 to 55.

4. Luster pigments according to claims 1 to 3 that comprise an iron oxide coating having a geometric layer thickness from 18 to 25 nm.

5. Luster pigments according to claims 1 to 3 that comprise an iron oxide coating having a geometric layer thickness from 30 to 40 nm.

6. Luster pigments according to claims 1 to 3 that comprise an iron oxide coating having a geometric layer thickness from 110 to 140 nm.

7. Luster pigments according to claims 1 to 6 that further comprise, directly on the aluminum platelets and/or on the iron oxide layer, a corrosion-inhibiting coating based on oxidic chromium, molybdenum, phosphorus, silicon, zirconium and/or aluminum compounds.

8. Use of luster pigments according to claims 1 to 7 for coloration of coatings, paints, printing inks, plastics, ceramic compositions and glazes and decorative cosmetic preparations.

9. Use of luster pigments according to claims 1 to 7 for coloration of one coat, two coat or multicoat metallics.

10. Use according to claim 8 or 9, wherein the luster pigments are employed in combination with other pigments from the group of effect pigments, fluorescent colorants, hiding and transparent chromatic, white and black pigments.

## Revendications

1. Pigments brillants à effet scintillant marqué, à base de paillettes d'aluminium qui sont enrobées avec de l'oxyde de fer et présentent avant l'enrobage une taille moyenne de paillette de 8 à 30 μm, une épaisseur moyenne de paillette de 300 à 600 nm et un rapport de la taille à l'épaisseur de 15 à 70.

2. Pigments brillants selon la revendication 1, qui sont à base de paillettes d'aluminium ayant un rapport de la taille à l'épaisseur de 25 à 55.

3. Pigments brillants selon la revendication 1, qui sont à base de paillettes d'aluminium ayant une taille moyenne de paillette de 13 à 25 μm, une épaisseur moyenne de paillette de 350 à 550 nm et un rapport de la taille à l'épaisseur de 25 à 55.

4. Pigments brillants selon les revendications 1 à 3, qui comportent un enrobage d'oxyde de fer ayant une épaisseur de couche géométrique de 18 à 25 nm.

5. Pigments brillants selon les revendications 1 à 3, qui comportent un enrobage d'oxyde de fer ayant une épaisseur de couche géométrique de 30 à 40 nm.

6. Pigments brillants selon les revendications 1 à 3, qui comportent un enrobage d'oxyde de fer ayant une épaisseur de couche géométrique de 110 à 140 nm.

7. Pigments brillants selon les revendications 1 à 6, qui en outre comportent directement sur les paillettes d'aluminium et/ou sur la couche d'oxyde de fer un enrobage anticorrosion, à base de composés de type oxyde de chrome, molybdène, phosphore, silicium, zirconium et/ou aluminium.

8. Utilisation de pigments brillants selon les revendications 1 à 7, pour la coloration de laques, de peintures, d'encres d'impression, de matières plastiques, de glaçures et matières céramiques et de préparations dans la cosmétique de maquillage.

9. Utilisation de pigments brillants selon les revendications 1 à 7, pour la coloration de revêtement de peintures métallisées monocouches, bicouches et multicouches.

10. Utilisation selon la revendication 8 ou 9, **caractérisée en ce qu'**on utilise les pigments brillants en association avec d'autres pigments choisis dans le groupe des pigments à effet, des colorants fluorescents, des pigments colorés, blancs et noirs, couvrants et transparents.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 33457 A